# EUROPEAN PATENT SPECIFICATION

(11) **EP 0 879 372 B1**
(45) Date of publication and mention of the grant of the patent: **24.09.2003**
(21) Application number: 97906581.0
(22) Date of filing: 14.02.1997
(51) Int. Cl.: F16J 15/18, F16K 41/02

(54) **STEM SEALING SYSTEM FOR BROAD TEMPERATURE RANGES**
SPINDELDICHTUNG FÜR EINEN ERWEITERTEN TEMPERATURBEREICH
SYSTEME D'ETANCHEITE POUR TIGE FONCTIONNANT DANS UNE GRANDE PLAGE DE TEMPERATURES

(30) Priority: 16.02.1996 WO PCT/US11/00821; 21.03.1996 US 620695
(43) Date of publication of application: 25.11.1998
(73) Proprietor: BARBER-COLMAN COMPANY, Loves Park, IL 61132-2940 (US)
(72) Inventor: ERICKSON, Irving, C., Rockford, IL 61107 (US)
(74) Representative: Greenwood, John David
(86) International application number: US9702249
(87) International publication number: WO97030303

(56) References cited:
- DE-A- 2 022 122
- FR-A- 2 212 897
- GB-A- 2 045 388
- US-A- 2 936 187

## Description

### Technical Field

The present invention relates to valve stems and particularly to sealing arrangements for both high and low temperature valve stems with reduced friction. More particularly, the present invention relates to valve stem packing seal systems bearing a lubricant source for use over broad and varying temperatures.

### Background of the Invention

A valve stem seal's fitness for use depends upon its ability to prevent fluid from passing thereby, upon its mechanical strength, and upon its antifriction properties. The adverse effects of temperature upon the valve components and frictional properties significantly affect fitness for use.

In a sealing system for the purpose of isolating fluid on one side of a seal from fluid on the other while directly transmitting mechanical force and/or torque from one side to the other, one or more seals wipe the moving member in a manner directed to isolating the fluids. This is conventionally done with mechanical wipers such as "Vee's, cones, or U-cups" with initial lubrication provided. Lubrication methods include having a compressible section of felt or braid which serves as a seal and wick for lubricant when squeezed by a packing cap or spring.

With most stem seal systems, shrinkage and lack of compliance of said materials at low temperatures result in leaks. Special materials are required at high temperatures, wherein the shrinkable/compliance problems are exacerbated at low temperatures.

Plastic materials have substantially higher yield strengths and low creep rates at lower temperatures, and hence the adaptability which contributes to sealing at higher temperatures is not readily available at lower temperatures.

The purposes of the present invention are to provide a low friction valve stem sealing arrangement in which a lubrication ring carries lubricant to the seal elements, and to provide positive lubricant installation and containment.

GB-A-2 045 388 discloses a seal assembly between a plunger and cylinder, e.g. in a high pressure pump, includes: a rigid high pressure seal ring, e.g. of PTFE fibres impregnated with PTFE; a flexible seal ring, e.g of bark (e.g. ramie) fibres impregnated with PTFE; and self-lubricating carbon guide rings intended to establish a lubricating film on the piston. End rings are of brass and steel respectively.

DE-A-2,022,122 discloses a stem and bore sealing system according to the preamble of claim 1. The stem and bore sealing system of the present invention is characterized by the features of the characterizing portion of claim 1. A method of assembling a stem and bore sealing system, according to a further aspect of the present invention, is as claimed in claim 16. Optional features of the invention in its two aspects are claimed in dependant claims.

An improved stem sealing system for broad temperature ranges is assembled from a bonnet which may be cylindrical and has a longitudinal axis. An axial bore having a surface extends through the bonnet. The bonnet is partially closed at a bottom end thereof by a radially inward extending lip. It is closed at the top, opposite end of the cylindrical bonnet by a packing top cover threaded into a recessed portion of the bonnet. A moveable stem extends along the central axis through the bonnet. The stem is terminated at a valve plug assembly at the bottom end outside the bonnet, and may be connected to an operative element at the top end of the stem. A fixed stem seal element rests inside the bonnet cylinder against a bottom lip supporting a compressible loading spring the top end of which rests against a lower wiping member and urges it away from the bottom lip. An upper wiping member is secured within the cylinder central bore by a packing top cover.

The present invention has seal member wiping surfaces which are urged into sealing engagement by the loading spring, and are then lubricated differently than in the prior art. One or more spaces between two seal member edges contains an intermediate substance consisting of approximately 50% grease inside a spongy foam-like material with open cells, forming a lubrication ring. The space(s) is compressed by the loading spring, and the assembly is closed at the bottom and top, where it is compressed by a packing top.

Between the upper and lower wiping members lies the lubrication ring. The upper and lower wiping members, the lubrication ring, and the fixed stem seal lie in frictional engagement with an inner diameter surface forming the central bore of the bonnet. Further, the upper and lower wiping members, the lubrication ring, and the fixed stem seal are in frictional contact with, and circumjacent the valve stem. The upper and lower wiping members include axially extended central portions and each includes an axially recessed area facing and engaging the upper and lower wiping member axially extended portions extending into the lubrication ring. That is, the axial extensions of the upper and/or lower wiping members closely mate with the lubrication ring recesses. One or more intermediate wiping members may be included, accompanied by additional lubrication rings in the order: wiping member, lubrication ring, wiping member, etc.

The axially extended central portions of the stem seal and lower wiping member assist in centering the loading spring which lies therebetween. The lubrication ring(s) thus takes the form of a toroid with an axially extending outer rim portion and central depressed areas on both sides thereof.

Each of the lubrication rings is formed of a grease or lubricant retaining foam material or the like, preferably of an open cell structure material.

To overcome shrinkage and lack of compliance at low temperatures, the open cell sponge-like configuration is utilized to substantially increase adaptability at all temperatures, providing low temperature flexibility and a capability for holding lubricants without the use of specialty or braided materials. These characteristics enable design of effective packings which are effective over wider temperature spans and excursions. The length of the pressure chamber(s) is not limited and can exceed stem travel, so that scratches caused by fluid particle entrapment will not traverse both outside sealing edges.

Compression of the lubrication ring(s) by the upper and lower wiping members provides three functions. First, the axially extending central portions of the upper and lower wiping members are fitted to the lubrication ring such that compression of the lubrication ring between these wiping members forces lubricant from the lubrication ring. Secondly, these compressive forces tend to expand the outer periphery of the lubrication ring, as well as the wiping members, against the inner wall of the central bonnet. Thirdly, compressive forces urge the lubrication ring to expand inwardly against the valve stem, thus sealing the valve stem directly. The outer compressive forces of the lubrication ring provide a seal against microscopic leakage paths along the inner wall of the central bore of the cylindrical bonnet, and also provide a movable seal against microscopic leakage paths along the valve stem in this sealing assembly.

In preparation for assembly of the stem seal; the lubrication ring(s) may be prefilled with lubricant. The lubricant may also be installed between the wiper members and the lubrication ring(s) during assembly. With a valve stem fixed stem seal, loading spring, and lower wiping member in place, the lubrication ring and lubricant are installed into the bonnet capturing the lubricant within the cavity. Alternatively, lubricant may be injected before the lube rings, after the lube rings, or both depending on whether it is built upside down or not. The upper wiping member is then installed. The wiper members, with their projections facing the foam lubrication ring, are forced together against the lubrication ring by tightening the packing top and the projections force themselves into the foam lubrication ring. This provides localized compressive stresses to grip the stem and expand outwardly against the axial bore surface. Simultaneously, the lubricant (having no escape path) is forced into, fills, and flows through the open cell structure of the lubrication ring, thereafter reaching and lubricating the stem and sealing any microscopic leak paths. Any remaining lubricant is retained within the cavity beyond the open cell capacity of the lubrication ring.

The pressure within this lubrication ring-filled space is the pressure of the fluid on the spring side combined with the pressure from the spring force, divided by the cross sectional area of the bore. Thus, when designed with the spring on the high pressure side, the chamber pressure is greater than the fluid presser P and flow tendencies are from the chamber toward the fluids, rather than into it or through it. The lubricant effectively cannot flow between the stem and the seal members which are separated only by an adhering film of lubricant which clings to the stem filling the space between surface aspiraties.

In the event of wear, or loss of lubricant, the spring provides a pressure force and movement replacing the lubricant used from the cavity and the spongy material assists in squeezing the sealing edges to wipe the stem clean. Reciprocating stem action to move the seals back and forth a very small amount brings new lubricant to the stem.

### Brief Description of the Drawing Figures

The invention will appear more clearly from a detailed description of the preferred embodiments of the invention to be given in the following description taken together with the accompanying drawings in which:
FIG. 1 is a cross-section of the stem sealing system;
FIG. 2 illustrates an exploded view of the stem sealing system assembly;
FIG. 3 is a cross-section of the stem sealing system of FIG. 1, further including the valve stem and plug assembly; and
FIG. 4 is a cross-section of an alternate stem sealing system including an intermediate wiping member and an additional lubrication ring.

### Detailed Description of the Preferred Embodiments

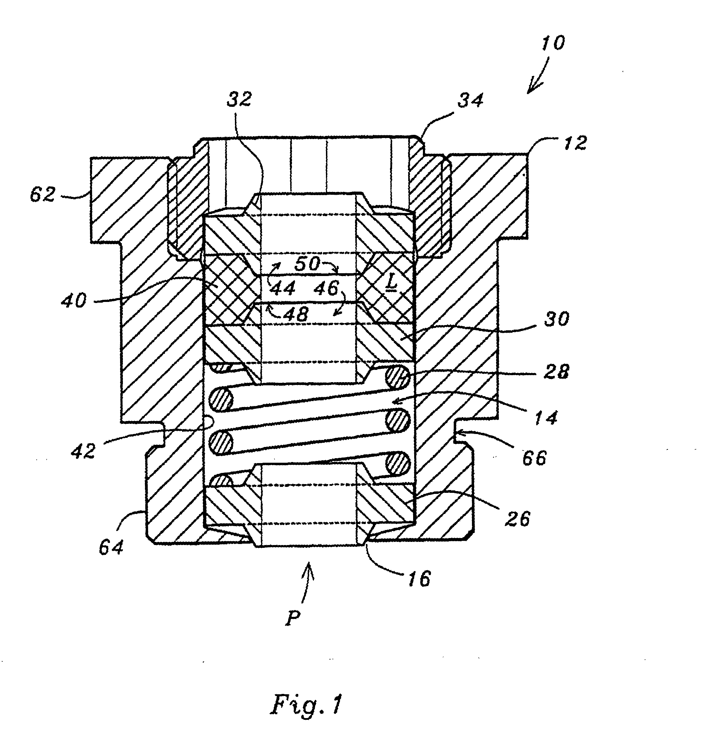

Referring now to the drawing figures, wherein the illustrations are for purposes of showing preferred embodiments of the invention 10 only and not for purposes of limiting the appended claims, there is shown in FIGS. 1-3 a bonnet 12, which may be cylindrical and which may have stepped portions along its outer periphery includes a central bore 14. The central bore is partially enclosed at the bottom by a lip 16 which extends radially inward of the bore 14.

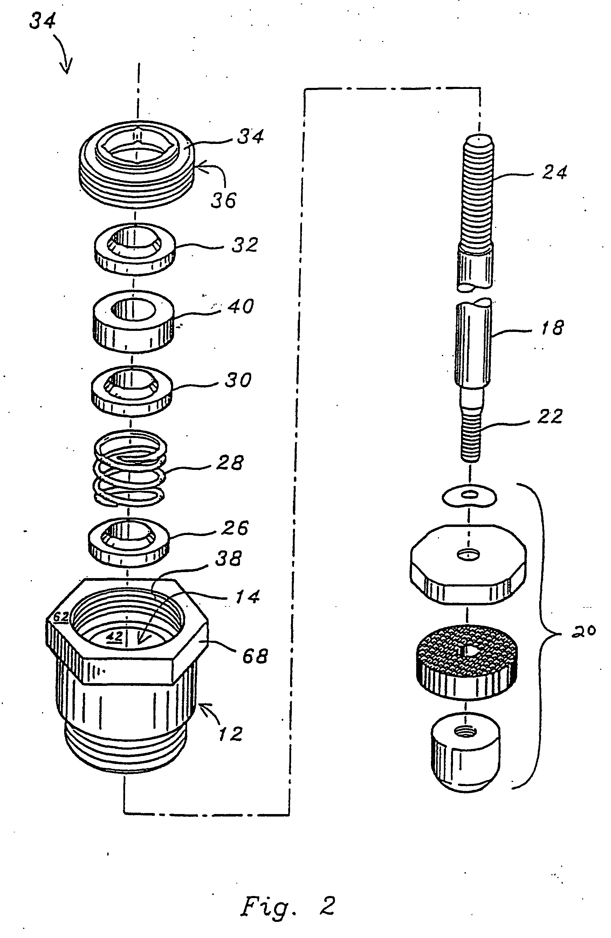

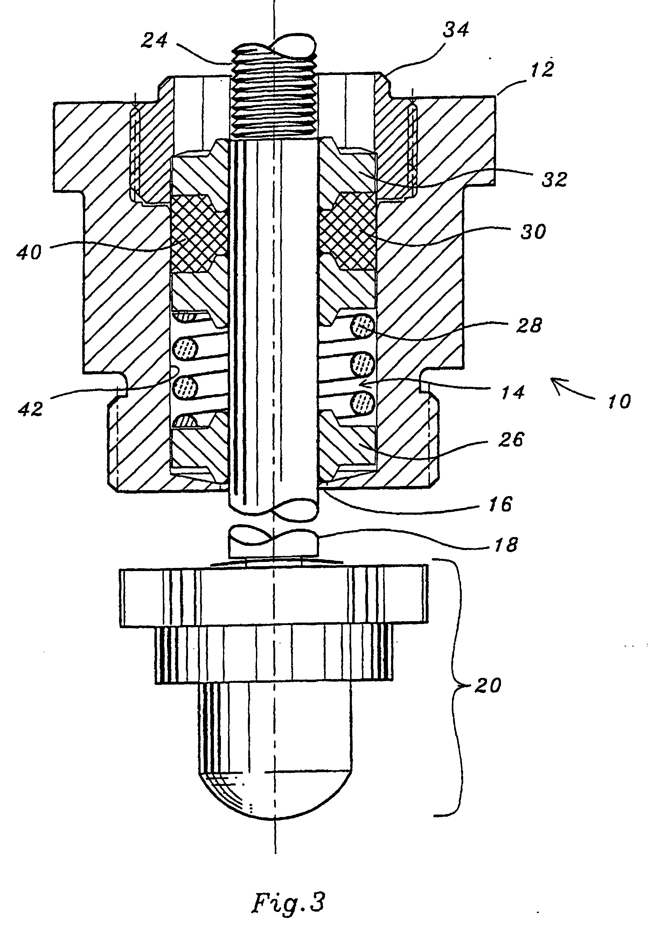

A valve stem 18 (see FIGS. 2 and 3) is disposed within the central bore 14 of bonnet 12 and extends along the central axis through the bonnet. The valve plug assembly 20 is attached at the bottom end of stem 18 by threads 22 or the equivalent. Threads 24 (or the equivalent) are included at the top end of the valve stem 18 for connection to an operator. A fixed stem seal element 26 rests inside the bonnet bore 14 against the bottom lip 16. Seal 26 supports a compressible loading spring 28, which may be helical in form, and the top end of the spring 28 rests against a lower wiping member 30. The loading spring 28 urges lower wiping member 30 apart from the bottom lip 16. An upper wiping member 32 is secured within this central bore 14 of the bonnet 12 by a packing top cover 34. Top cover 34, which may include external threads 36 mating with internal threads 38 located within a recessed top portion of the bore 14 of bonnet 12, secures the upper wiping member 32 and the remaining valve seal elements within the bonnet.

A lubrication ring lies between the upper and lower wiping members. The lower and upper wiping elements 30, 32, the lubrication ring 40, and the fixed end seal 26 lie in frictional engagement with the inner surface 42 of the central bore in the bonnet. The lower and upper wiping members 30, 32, the lubrication ring 42, and the fixed end seal 26 are also in frictional contact with and circumjacent to, the valve stem 18 (see Fig. 3).

The upper and lower wiping members include axially extended central portions 44, 46. The lubrication ring 40 may be formed in a simple hollow cylindrical shape as shown in FIG. 2. The lubrication ring is preformed to include axially recessed central areas 48, 50 facing and engaging the lower and upper wiping members 30, 32 axially extended portions 44, 46. These axially extended portions 30, 32 depress and conform the central areas 48, 50 (respectively) on respective lower and upper transverse surfaces of lubrication ring 40 when placed under axial compression by spring 18. The lubrication ring then takes the form of a toroid with an axially extended outer rim portion and central depressed areas on each side thereof. The wiping members 30, 32 as well as fixed end seal 26 are formed of a material which preferably retains its size, shape, and compliance at low temperatures, as well as resists severe deformation at high temperatures.

For purposes of this example, the valve stem 18 may be of about 1/4-inch (6mm) diameter and of a length suitable to extend from the valve plug assembly 20 to the operator, not shown. The lower and upper wiping members 30, 32 may be of solid virgin polytetrafluouroethylene ("Teflon" ^{tm}) or the equivalent. Likewise, fixed end seal 26 may also be of virgin Teflon or may be reinforced or formed of another material for added strength. Lubrication ring 40 is of an open-celled Teflon foam or the like to provide a reservoir of lubricant for long term sealing and lubrication L at extended temperatures.

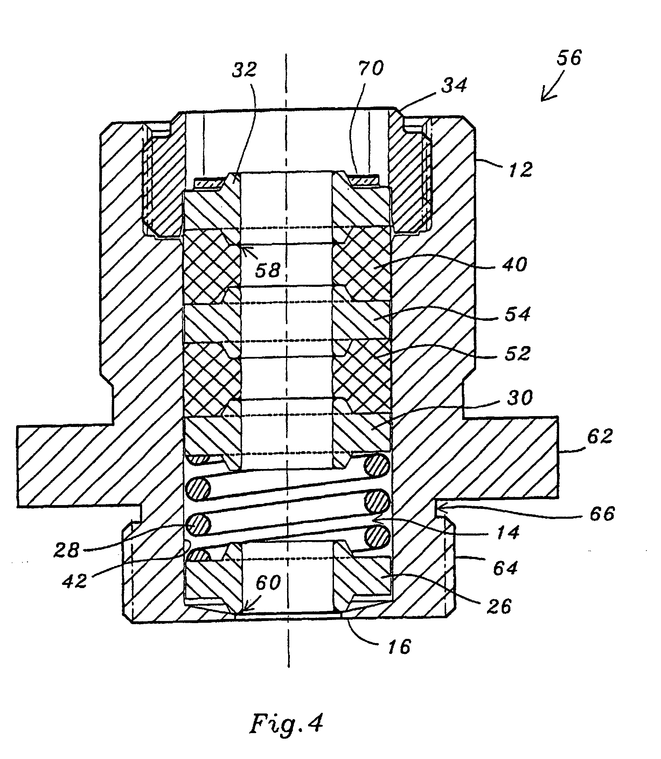

As shown more clearly in FIG. 4, one or more additional lubrication rings 52 and one or more intermediate wiping members 54 may be disposed along the stem 18 shaft (not seen in FIG. 4) within the bore 14 of bonnet 12 to form a higher-pressure stem sealing system 56 in an alternate embodiment of the present invention.

An important feature of the present device resides in the ultimately toroidal shape of the porous Teflon lubrication ring 40 (and 52, etc.) in cooperation with the lower and upper wiping members 30, 32 (and the immediate wiping members 54, etc.). The lubrication rings integrate with the upper and lower wiper members such that movement of the shaft 18 and activation of the loading spring 28 results in a positive displacement of lubricant from the lubricant ring 40 (52). The lower and upper wiping members 30, 32 (54) and the lubrication ring 40 (52) are forced together by tightening the packing top 34 via the force of loading spring 28. The axially extending portions of the wiping members 30, 32 (54) force themselves into the softer lubrication ring 40 (52) providing localized compressive stress forces to grip the stem 18 and the inner wall 42 of the bonnet at the central core thereof. More particularly, greater sealing forces are urged against the stem at a plurality of seal member, lubrication ring, and stem locations, as illustrated by points 58, 60 in FIG.4. Through the urging force of loading spring 28 the lubrication L is forced into and flows through these open cells of the lubrication ring 40 (52) reaching and lubricating valve stem 18 and the bore 14 inner surface 42, thus sealing any microscopic leakage paths through the valve stem assembly and bonnet.

Note that fixed stem seal 26 initially seals the stem seal assembly from the valve fluid P and thus partially isolates the remaining seal components therefrom. Further, fixed end seal 26 provides a seat for loading spring 28. Through the use of axially extending central portions surrounding the central-bore in fixed end seal 26, the fixed end seal can self-position itself for sealing against bottom lip 16 (as shown in FIG. 1) and also provides the self-centering mechanism to pre-position the loading spring D. Depending on the size and shape selected for seal 26 and the inner diameter and shape of lip 16, the self-positioning feature may be eliminated, as shown in FIG. 4.

Further, a seal washer 70 having a larger central aperture (shown only in FIG. 4) may be used between packing top cover 34 and the upper peripheral surface of upper wiping member 32 in order to distribute the sealing forces supplied by the packing top cover more uniformly against wiping member.

The bonnet 12, which is preferably circular, may be of a stepped design including radially extending 62, 64 and radially recessed 66 portions distributed along its length to provide an outer flange for sealing. Inner recessed peripheral grooves 66 may be provided for holding 0-rings or the like for sealing. Portions may be threaded to enable mounting in the valve body, not shown. Suitable "flats" 68 may be provided on the bonnet to facilitate application of the rotary torque by a wrench to tighten the bonnet in the valve body.

Assembly of the stem seal 10 (56) may be accomplished using 40 (52) lubrication ring(s) which are prefilled with lubricant L (see FIGS. 1, 2, and 4). The lubricant L may also be installed between the wiper members 30, 32 (and 54) and the lubrication ring(s) during assembly. With a valve stem 18, fixed stem seal 26, loading spring 28, and lower wiping member 30 in place, the lubrication ring 40 and lubricant L are installed into the bonnet 12 capturing the lubricant L circumjacent stem 18 within the cavity 14. Alternatively, lubricant L may be injected into the cavity 14 before the lube ring(s) 40 (52), after the lube ring(s), or both depending on whether it is assembled upside down or not. The upper wiping member 32 is then installed. The wiper members 30, 32 (54) with their projections facing the foam lubrication ring(s) 40 (52), are forced together against the lubrication ring(s) by tightening the packing top 34 and the projections then force themselves into the foam lubrication ring(s). This method provides localized compressive stresses to grip the stem and expand outwardly against the axial bore surface at various locations: for example 58, 60 (FIG.4). Simultaneously, the lubricant L (having no escape path) is forced into, fills, and flows through the open cell structure of the lubrication ring(s) 40 (52), thereafter reaching and lubricating the stem 18 and sealing any microscopic leakage paths. Any remaining lubricant L is retained within the cavity beyond the open cell capacity of the lubrication ring.

Although certain presently preferred embodiments of the invention have been described herein, it will be apparent to those skilled in the art to which the invention pertains that variations and modification of the described embodiment may be made without departing from the scope of the invention of the appended claims.

## Claims

1. A stem and bore sealing system including
first and second wiping members (32,30) disposed circumjacent an elongated portion of the stem (18) and disposed within the bore (14);
a lubrication ring (40) disposed circumjacent the stem (18), within the bore (14), and intermediate the first and second wiping members (32,30);
wherein the lubrication ring (40) comprises a porous, lubricant-retaining structure under axial compression between the first and second wiping members (32,30) and wherein the lubrication ring (40) has respective lubricant exuding surfaces which are urged towards the stem (18) and the bore (14), and are disposed in intimate contact with the first and second wiping members (32, 30) **characterized in that** the lubrication ring has a centrally located, axially depressed central area (48 or 50) on at least one side thereof.

2. The sealing system of claim 1, wherein the lubrication ring (40) is polytetrafluouroethylene.

3. The sealing system of claims 1 or 2, wherein the lubrication ring (40) is ring-shaped with a central bore.

4. The sealing system of any preceding claim, wherein the lubrication ring (40) is toroidal in shape.

5. The sealing system of any of the preceding claims, wherein the first wiping member (32) is ring-shaped, having a centrally located, axially extending central area (44) on at least one side thereof

6. The sealing system of claim 5 wherein said axially extending central area (44) of said first wiping member (32) mates with the centrally located, axially depressed central area (50) of the lubrication ring (40).

7. The sealing system of any one of the claims 1 to 5 wherein the second wiping member (30) is ring-shaped, having a centrally located, axially extending central area (46) on at least one side thereof.

8. The sealing system of claim 7, wherein the centrally located, axially extending central area (46) of the second wiping member (30) mates with the centrally located, axially depressed central area (48) of the lubrication ring (40).

9. The sealing system of any one the preceeding claims, wherein the first wiping member (32) is polytetrafluouroethylene.

10. The sealing system of any one of the preceding claims, wherein the second wiping member (30) is polytetrafluouroethylene.

11. The sealing system of any one of the preceding claims, further including a bonnet (12) having a central axis therein about the cylindrical bore (14), said bonnet (12) having distal and proximal ends wherein said distal end is partially closed by a radially inward extending bottom lip (16).

12. The sealing system of claim 11, further including a removable top cover (34) having a central aperture and adapted for at least partially enclosing said proximal end of the bonnet (12).

13. The sealing system of claim 12, wherein said first wiping member (32) is disposed in the bore adjacent to and retained therein by the top cover (34).

14. The sealing system of any one of claims 11 to 13, further comprising a fixed stem seal member (26) disposed in the bore (14) adjacent the bottom lip (16).

15. The sealing system of any of the preceding claims, further including a loading spring member (28) disposed between The bottom and the second wiping member (30), adapted for urging the second wiping member (30) toward the lubrication ring (40).

16. A method of assembling a stem and bore sealing system, comprising:
a) providing a valve stem (18) in the bore (14);
b) installing a first wiping member (32) in the bore (14) circumjacent the stem (18);
c) installing a porous, lubricant-retaining lubrication ring (40) in the bore (14) circumjacent the stem (18) and against the first wiping member (32) the lubrication ring (40) having a centrally located, axially depressed control area (48 or 50) on at least one side thereof;
d) installing a second wiping member (30) against the lubrication ring (40) in the bore (14) circumjacent the stem (18) and axially displaced from the first wiping member (32);
e) compressing the lubrication ring (40) between the first and second wiping members (32, 30); and
f) securing the first wiping member (32), the lubrication ring (40), and the second wiping member (30) in the central bore (14).

17. The method of claim 16, further including the step of disposing a lubricant between the first wiping member (32) and the lubrication ring (40).

18. The method of claim 16, further including the step of disposing a lubricant between the second wiping member (30) and the lubrication ring (40).

19. The method of claim 16, further including the step of filling the lubrication ring (40) with a lubricant before installation in step c).

## Patentansprüche

1. Spindel- und Bohrungsdichtungssystem mit
ersten und zweiten Wischelementen (32, 30), die einen länglichen Abschnitt der Spindel (18) umgebend innerhalb der Bohrung (14) angeordnet sind;
einem Schmierring (40), der die Spindel (18) umgebend innerhalb der Bohrung (14) und zwischen den ersten und zweiten Wischelementen (32, 30) angeordnet ist;
wobei der Schmierring (40) eine poröse, Schmiermittel-haltende Struktur unter axialer Kompression zwischen den ersten und zweiten Wischelementen (32, 30) umfasst, und wobei der Schmierring (40) jeweilige Schmiermittelausscheidende Oberflächen aufweist, die zu der Spindel (18) und der Bohrung (14) gedrängt werden und in inniger Berührung mit den ersten und zweiten Wischelementen (32, 30) angeordnet sind, **dadurch gekennzeichnet, dass** der Schmierring einen zentral positionierten, axial vertieften zentralen Bereich (48 oder 50) an mindestens einer Seite desselben aufweist.

2. Dichtungssystem gemäß Anspruch 1, bei dem der Schmierring (14) aus Polytetrafluorethylen ist.

3. Dichtungssystem gemäß Anspruch 1 oder 2, bei dem der Schmierring (40) ringförmig mit einer zentralen Bohrung ist.

4. Dichtungssystem gemäß einem der vorhergehenden Ansprüche, bei dem der Schmierring (40) toroidförmig ist.

5. Dichtungssystem gemäß einem der vorhergehenden Ansprüche, bei dem das erste Wischelement (32) ringförmig mit einem zentral positionierten, sich axial erstreckenden zentralen Bereich (44) an mindestens einer Seite desselben ist.

6. Dichtungssystem gemäß Anspruch 5, bei dem sich der axial erstreckende zentrale Bereich (44) des ersten Wischelements (32) mit dem zentral positionierten, axial vertieften zentralen Bereich (50) des Schmierrings (40) paart.

7. Dichtungssystem gemäß einem der Ansprüche 1 bis 5, bei dem das zweite Wischelement (30) ringförmig mit einem zentral angeordneten, sich axial erstreckenden zentralen Bereich (46) an mindestens einer Seite desselben ist.

8. Dichtungssystem gemäß Anspruch 7, bei dem sich der zentral angeordnete, sich axial erstreckende zentrale Bereich (46) des zweiten Wischelements (30) mit dem zentral angeordneten, axial vertieften zentralen Bereich (48) des Schmierrings (40) paart.

9. Dichtungssystem gemäß einem der vorhergehenden Ansprüche, bei dem das erste Wischelement (32) aus Polytetrafluorethylen ist.

10. Dichtungssystem gemäß einem der vorhergehenden Ansprüche, bei dem das zweite Wischelement (30) aus Polytetrafluorethylen ist.

11. Dichtungssystem gemäß einem der vorhergehenden Ansprüche, ferner mit einer Kappe (12), die eine zentrale Achse darin um die zylindrische Bohrung (14) aufweist, wobei die Kappe (12) distale und proximale Enden aufweist, wobei das distale Ende teilweise durch eine sich radial nach innen erstreckende untere Lippe (16) verschlossen ist.

12. Dichtungssystem gemäß Anspruch 11, ferner mit einer entfernbaren oberen Abdeckung (34), die eine zentrale Öffnung aufweist und für mindestens teilweises Umschließen des proximalen Endes der Kappe (12) angepasst ist.

13. Dichtungssystem gemäß Anspruch 12, bei dem das erste Wischelement (32) in der Bohrung benachbart der oberen Abdeckung (34) angeordnet ist und darin durch diese zurückgehalten wird.

14. Dichtungssystem gemäß einem der Ansprüche 11 bis 13, ferner mit einem festen Spindeldichtungselement (26), das in der Bohrung (14) benachbart der unteren Lippe (16) angeordnet ist.

15. Dichtungssystem gemäß einem der vorhergehenden Ansprüche, ferner mit einem Belastungsfederelement (28), das zwischen dem Boden und dem zweiten Wischelement (30) angeordnet und zum Drängen des zweiten Wischelements (30) zu dem Schmierring (40) hin angepasst ist.

16. Verfahren zum Zusammenbauen eines Spindel- und Bohrungsdichtungssystems mit:
a) Bereitstellen einer Ventilspindel (18) in der Bohrung (14);
b) Installieren eines die Spindel (18) umgebenden ersten Wischelements (32) in der Bohrung (14);
c) Installieren eines porösen, Schmiermittel-haltenden Schmierrings (40) in der Bohrung (14) die Spindel (18) umgebend und gegen das erste Wischelement (32), wobei der Schmierring (40) einen zentral angeordneten, axial vertieften zentralen Bereich (48 oder 50) an mindestens einer Seite desselben aufweist;
d) Installieren eines zweiten Wischelements (30) gegen den Schmierring (40) in der Bohrung (14) die Spindel (18) umgebend und axial von dem ersten Wischelement (32) versetzt;
e) Zusammendrücken des Schmierrings (40) zwischen den ersten und zweiten Wischelementen (32,30); und
f) Sichern des ersten Wischelements (32), des Schmierrings (40) und des zweiten Wischelements (30) in der zentralen Bohrung (14).

17. Verfahren gemäß Anspruch 16, ferner mit dem Schritt eines Anordnens eines Schmiermittels zwischen dem ersten Wischelement (32) und dem Schmierring (40).

18. Verfahren gemäß Anspruch 16, ferner mit dem Schritt eines Anordnens eines Schmiermittels zwischen dem zweiten Wischelement (30) und dem Schmierring (40).

19. Verfahren gemäß Anspruch 16, ferner mit dem Schritt eines Füllens des Schmierrings (40) mit einem Schmiermittel vor der Installation bei Schritt c).

## Revendications

1. Système d'étanchéité pour tige-orifice comprenant :
un premier et un second éléments d'essuyage (32, 30) disposés autour d'une partie allongée de la tige (18) et disposés à l'intérieur de l'orifice (14);
une bague de lubrification (40) disposée autour de la tige (18) dans l'orifice (14) et entre le premier et le second éléments d'essuyage (32, 30);
dans lequel la bague de lubrification (40) comprend une structure poreuse retenant le lubrifiant sous compression axiale entre le premier et le second éléments d'essuyage (32, 30) et dans lequel la bague de lubrification (40) a des surfaces respectives d'exudation de lubrifiant qui sont pressées vers la tige (18) et l'orifice (14) et sont disposées en contact intime avec le premier et le second éléments d'essuyage (32, 30), **caractérisé en ce que** la bague de lubrification a une zone centrale (48 ou 50) située centralement et enfoncée axialement sur au moins l'un de ses côtés.

2. Système d'étanchéité selon la revendication 1, dans lequel la bague de lubrification (40) est formée de polytétrafluoréthylène.

3. Système d'étanchéité selon la revendication 1 ou 2, dans lequel la bague de lubrification (40) est de forme annulaire avec un orifice central.

4. Système d'étanchéité selon l'une quelconque des revendications précédentes, dans lequel la bague de lubrification (40) est de forme toroïdale.

5. Système d'étanchéité selon l'une quelconque des revendications précédentes, dans lequel le premier élément d'essuyage (32) est de forme annulaire, ayant une zone centrale (44) située centralement et s'étendant axialement sur au moins l'un de ses côtés.

6. Système d'étanchéité selon la revendication 5, dans lequel ladite zone centrale (44) s'étendant axialement dudit premier élément d'essuyage (32) s'adapte à la zone centrale (50) située centralement et enfoncée axialement de la bague de lubrification (40).

7. Système d'étanchéité selon l'une quelconque des revendications 1 à 5, dans lequel le second élément d'essuyage (30) est de forme annulaire, ayant une zone centrale (46) située centralement et s'étendant axialement sur au moins l'un de ses côtés.

8. Système d'étanchéité selon la revendication 7, dans lequel la zone centrale (46) située centralement et s'étendant axialement du second élément d'essuyage (30) s'adapte à la zone centrale (48) située centralement et enfoncée axialement de la bague de lubrification (40).

9. Système d'étanchéité selon l'une quelconque des revendications précédentes, dans lequel le premier élément d'essuyage (32) est formé de polytétrafluoréthylène.

10. Système d'étanchéité selon l'une quelconque des revendications précédentes, dans lequel le second élément d'essuyage (30) est formé de polytétrafluoréthylène.

11. Système d'étanchéité selon l'une quelconque des revendications précédentes, comprenant en outre un chapeau (12) présentant un axe central autour de l'orifice cylindrique (14), ledit chapeau (12) ayant des extrémités distale et proximale, dans lequel ladite extrémité distale est partiellement fermée par une lèvre inférieure (16) s'étendant radialement vers l'intérieur.

12. Système d'étanchéité selon la revendication 11, comprenant en outre un couvercle supérieur enlevable (34) ayant une ouverture centrale et qui est à même d'enserrer au moins partiellement ladite extrémité proximale dudit chapeau (12).

13. Système d'étanchéité selon la revendication 12, dans lequel ledit premier élément d'essuyage (32) est disposé dans l'orifice à proximité du couvercle supérieur (34) et retenu par celui-ci.

14. Système d'étanchéité selon l'une quelconque des revendications 11 à 13, comprenant en outre un élément d'étanchéité fixe de tige (26) disposé dans l'orifice (14) à proximité de la lèvre inférieure (16).

15. Système d'étanchéité selon l'une quelconque des revendications précédentes, comprenant en outre un élément élastique de sollicitation (28) disposé entre la partie inférieure et le second élément d'essuyage (30) et qui est à même de presser le second élément d'essuyage (30) vers la bague de lubrification (40).

16. Procédé d'assemblage d'un système d'étanchéité pour tige-orifice, comprenant :
a) la mise en oeuvre d'une tige de soupape (18) dans l'orifice (14);
b) l'installation d'un premier élément d'essuyage (32) dans l'orifice (14) autour de la tige (18);
c) l'installation d'une bague de lubrification poreuse (40) retenant le lubrifiant dans l'orifice (14) autour de la tige (18) et contre le premier élément d'essuyage (32), la bague de lubrification (40) ayant une zone centrale (48 ou 50) située centralement et enfoncée axialement sur au moins l'un de ses côtés;
d) l'installation d'un second élément d'essuyage (30) contre la bague de lubrification (40) dans l'orifice (14) autour de la tige (18) et axialement décalé du premier élément d'essuyage (32);
e) la compression de la bague de lubrification (40) entre le premier et le second éléments d'essuyage (32, 30); et
f) la fixation du premier élément d'essuyage (32), de la bague de lubrification (40) et du second élément d'essuyage (30) dans l'orifice central (14).

17. Procédé selon la revendication 16, comprenant en outre l'étape de mise en place d'un lubrifiant entre le premier élément d'essuyage (32) et la bague de lubrification (40).

18. Procédé selon la revendication 16, comprenant en outre l'étape de mise en place d'un lubrifiant entre le second élément d'essuyage (30) et la bague de lubrification (40).

19. Procédé selon la revendication 16, comprenant en outre l'étape de remplissage de la bague de lubrification (40) par un lubrifiant avant l'installation de l'étape c).
